# EUROPEAN PATENT APPLICATION

(11) **EP 3 444 916 A1**
(43) Date of publication of application: **20.02.2019**
(21) Application number: 17781915.8
(22) Date of filing: 13.04.2017
(51) Int. Cl.: H02J 7/00

(54) **CHARGING CONTROL METHOD AND CHARGING CONTROL APPARATUS FOR PLURALITY OF CHARGING APPARATUSES, AND MOBILE DEVICE**

(30) Priority: 15.04.2016 CN 201610236887
(71) Applicant: Chigoo Interactive Technology Co., Ltd., Xinwu District Wuxi Jiangsu 214028 (CN)
(72) Inventor: CHEN, Tao, Wuxi Jiangsu 214028 (CN); LAN, Weijian, Wuxi Jiangsu 214028 (CN); PAN, Chuanrong, Wuxi Jiangsu 214028 (CN); ZHENG, Chengming, Wuxi Jiangsu 214028 (CN)
(74) Representative: Hautier IP
(86) International application number: PCT/CN2017/080414
(87) International publication number: WO 2017/177939

(57) **Abstract**

Discloses is a method for controlling charging of charging devices, which includes: serially connecting the plurality of charging devices into a charging queue and detecting parameters of at least some charging devices in the charging queue; determining a relative location of each charging device in the queue; and starting or stopping charging of each charging device according to the parameters and the relative location of the charging device. Also disclosed is a charging control device. Accordingly, the connection of any number of charging devices into the queue at any time without exceeding the power load by controlling start and stop of charging each charging device. Overcharging phenomenon can be prevented by stopping charging in a timely manner, saving electric energy. Also, the charging device at the queue tail can be charged preferentially, making it convenient for picking up a trolley from the queue tail, and better satisfying operation needs.

## Description

### TECHNICAL FIELD

The present invention relates to the field of charging technologies, and in particular, to a method for controlling charging of a plurality of charging devices, a charging control device, and a movable devices.

### BACKGROUND

With the development of the commercial and public service industries, movable devices such as trolleys or luggage vans have been widely used in public places such as shopping malls, supermarkets, and airports. In order to facilitate a user to obtain location information, navigation information, advertisement information and other related information of a merchant, electronic playing devices are usually installed on existing trolleys or luggage vans, and charging devices are installed on the trolleys or luggage vans. Because the number of these movable devices is large, the frequency of use in public places is relatively high, and the use of the movable devices is uneven, charging of charging devices of a large number of movable devices becomes complicated, and the workload of charging is heavy.

At present, a plurality of trolleys is connected in series through connectors, and the serially connected charging queue is connected to a charging power source for batch charging. However, when a plurality of trolleys is simultaneously charged, the current flowing through a charging bus is relatively large. The trolley at the head of the charging queue connected to a power supply (e.g., 27 VDC) can have a current on the charging bus of up to 52 A in the constant current charging phase (assuming there are 10 trolleys in the charging queue). At the moment when charging is started (if 10 trolleys are started simultaneously), the instantaneous surge current will be very large. Because the load capacity of the power supply is limited (for example, the maximum safety amount of simultaneous charging is 10), it is not possible to arbitrarily connect a movable device into the charging queue to avoid exceeding the limit of the safety amount.

Currently, charging a plurality of trolleys is conducted in any of the following ways:
1. The number of movable devices in the charging queue is limited to avoid exceeding a rated charging load of the power supply.
2. A predetermined number of movable devices are charged simultaneously and stop charging simultaneously. Due to the different power comsumption of various movable devices, however, it may cause unbalanced situations where some movable devices are overcharged, while other movable devices are not fully charged.
3. The movable device at the end of the charging queue is fully charged first and then the movable devices in front thereof are charged sequentially. In this way, each movable device is charged in turn, which not only renders a long time of the charging time for the whole charging queue, but also causes such a situation that even though a movable device at the tail has been fully charged, movable devices in front thereof is still undercharged or even not charged.
4. Each movable device is provided with a button for manual adjusting the order of charging. However, this method requires people's intervention, and that manual management may be insufficient sometimes.

### SUMMARY

It comes to the inventors' notice that existing modes for multiple charging are complicated, inefficient, causing waste of electrical energy, and may have safety problems (such as long-term battery overcharging and excessive instant charging current), which is necessary to be optimized.

In order to at least partially solve the prior art problems, one of the objects of the present invention is to provide a Method for controlling charging of a plurality of charging devices, a charging control device, and a movable devices.

In a first aspect, an embodiment of the present invention provides a method for controlling charging of a plurality of charging devices, including:
connecting the plurality of charging devices into a charging queue and detecting parameters of at least some charging devices in the charging queue;
determining a relative location of each charging device in the queue; and
starting or stopping charging of each charging device according to the parameters and the relative location of the charging device.

In a second aspect, an embodiment of the present invention provides a charging control device, including:
a parameter detection unit configured to detect parameters of at least some charging devices in a charging queue, the charging queue being formed by connecting a plurality of charging devices in series;
a location detection unit configured to determine a relative location of each charging device in the queue; and
a charging management unit configured to start or stop charging of each charging device according to the parameters and the relative location of the charging device.

In a third aspect, an embodiment of the present invention provides a movable devices, including:
a body;
a charging control device mentioned above and mounted on the body; and
a connector for connecting a charging control device to a charging power source.

According to the above embodiments, each charging device can be controlled to be started or stopped in a specific control manner according to the location and parameters of the respective charging device in a charging device queue (i.e., in the serially connected queue), which can not only realize a preferential charge for a certain number of charging devices at the tail of a queue so as to facilitate picking up a trolley from the rear of the queue, but can also realize the connection of any number of charging devices into the queue at any time for charging without exceeding the power load, thus improving the safety performance, preventing charging devices from overcharging, saving electric energy and improving charging efficiency.

### BRIEF DESCRIPTION OF THE DRAWINGS

Fig. 1 is a schematic diagram of trolleys connected in series in a charging queue according to an embodiment of the present invention;
Fig. 2 (a) is a schematic diagram of a charging circuit of a charging device on a trolley of Fig. 1;
Fig. 2(b) is a schematic diagram showing current distribution in the charging queue of Fig. 1;
Fig. 3 is a schematic flow chart of a charging control method of a charging device on a trolley according to an embodiment of the present invention;
Fig. 4 is a schematic diagram of detecting location information of each trolley in the charging queue of Fig. 3;
Fig. 5 is a schematic flow chart of information exchange between adjacent trolleys;
Fig. 6 (a) is a schematic flow chart of an interrupt of an MCU in processing forward infrared transmission in a PCB;
Fig. 6(b) is a schematic flow chart of an interrupt of the MCU in processing backward infrared receiving in the PCB;
Fig. 6(c) is a schematic flow chart of an interrupt of the MCU in processing serial port transmitting data in the PCB;
Fig. 6 (d) is a schematic flow chart of an interrupt of the MCU in processing serial port receiving data in the PCB;
Fig. 7 (a) is a schematic structural diagram of a charging control device according to a first embodiment of the present invention;
Fig. 7 (b) is a schematic structural diagram of a charging control device according to a second embodiment of the present invention;
Fig. 7 (c) is a schematic structural diagram of a charging control device according to a third embodiment of the present invention;
Fig. 8 is a schematic structural diagram of a parameter detection unit according to an embodiment of the present invention; and
Fig. 9 is a schematic structural diagram of a movable device according to an embodiment of the present invention.

### DETAILED DESCRIPTION

The present invention will now be described in further detail with reference to the accompanying drawings. In the following embodiments, a charging device is mounted on a carrier for charging. The carrier can be, for example, a trolley or a luggage van in an airport,, or a shopping cart in a shopping mall or supermarket. In the following, a trolley is taken as an example to describe the situation where a charging device is installed at the bottom of the frame of the trolley for charging. It will be understood by those skilled in the art that the charging device can also be charged by means of other carriers or other parts of the carrier, or the charging device can be charged apart from the carrier.

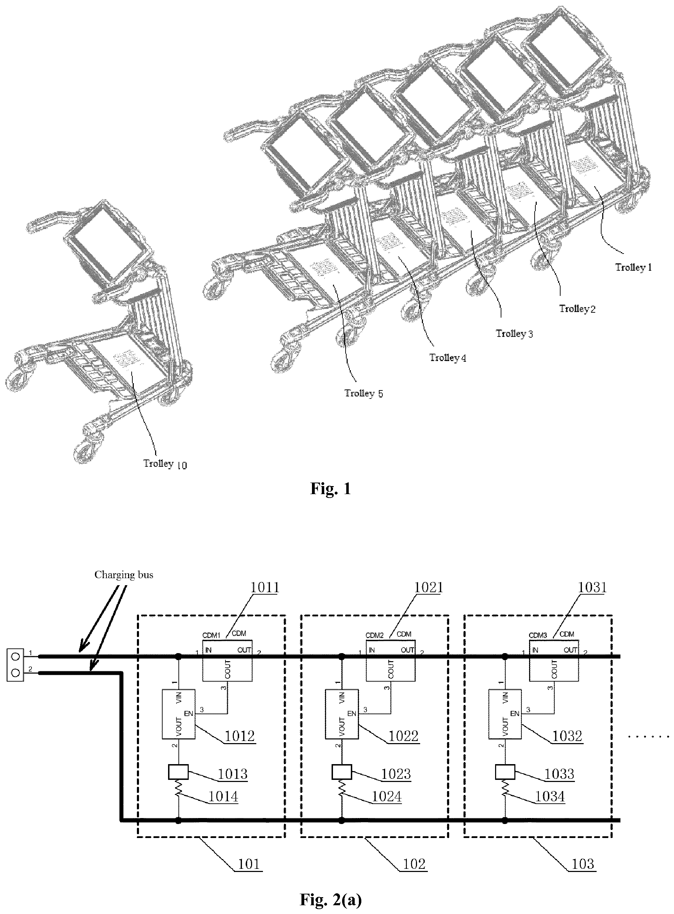

Fig. 1 is a schematic diagram of trolleys connected in series in a charging queue according to an embodiment of the present invention.

Referring to Fig. 1, a charging device (not visible due to being blocked by a frame in the figure) can be mounted at the bottom of a frame of a trolley. In order to charge charging devices in batches, a worker can use a plurality of connectors to connect a corresponding plurality of charging devices in series to a charging power source to form a charging queue. The connector includes a male plug and a female socket. A first electrode is mounted in the male head and a second electrode is mounted in the female socket. The details of this part can be made reference to, for example, the Chinese Utility Model Patent No. 201320013022.2 (CN203103711U; announced on July 31, 2013). The entire contents of this patent document are incorporated herein by reference. It can be understood by those skilled in the art that the charging device can also be installed at a front end, a rear end or two sides and the like of the trolley frame, which is not limited in the present invention.

Fig. 2 (a) is a schematic diagram of one embodiment of a charging circuit of a charging device on a trolley of Fig. 1.

As shown in Fig. 2(a), each of the blocks 101, 102, 103 ... represents a charging module of a trolley, respectively. Each charging module includes a bus current detection module 1011, 1021, 1031..., a controllable DC step-down module 1012, 1022, 1032..., a management module 1013, 1023, 1033..., and a rechargeable battery 1014, 1024, 1034..., respectively. Each charging module can have the same structure. The rechargeable battery can be a lithium battery.

Those skilled in the art will appreciate that each rechargeable battery can be provided when the trolley is put in use. In addition, the management module can use MCU control devices or single-chip microcomputers to implement charging management and control functions, and the number thereof can be set according to requirements. For example, the location determination unit and the charging management unit can be used to carry out respective functions.

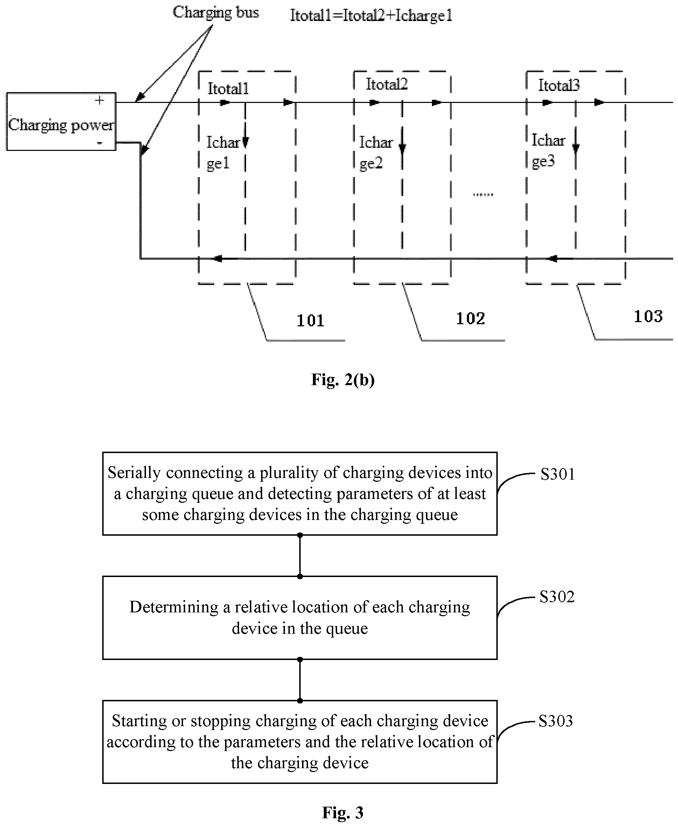

Fig. 2(b) is a schematic diagram of current distribution in the charging queue of Fig. 1. A plurality of connectors corresponding to the plurality of charging devices are connected to a charging power source in series, and the charging devices in the charging queue are connected in parallel to a charging bus formed by the serial connection of the connectors. A current value of a charging bus of each charging device (Iₜₒₜₐₗᵢ, i = 1, 2, 3, ..., n is a natural number) is, taking a charging device close to the charging power source as a front charging device, a sum of a current value in a charging bus of a rear charging device (I_{total (i+1)}, i=1, 2, 3...n-1) and a charging current value of the current charging device (I_{charge i}, i=1, 2, 3... n-1). For example, Iₜₒₜₐₗ₁ = Iₜₒₜₐₗ₂+ I_{charge1}. Similarly, current distribution in a charging bus of each trolley behind the trolley at the queue head also conforms to this rule. It can be seen that the current on the charging bus of the trolley at the queue head is the largest. When the current charging device does not start self-charging, the charging bus current of the present charging device is substantially equal to the charging bus current of the rear charging device thereof. The device itself can detect its own charging current, and the maximum value of its own charging current is predicted, so the device first needs to detect the bus current of the rear charging device before starting charging for itself to determine whether its charging can be started.

There are many ways to determine whether or not the self-charging has been started. Whether it is possible to start its own charging can be controlled by software. When a program is running, the software can determine whether there is an operation to start the charging by the value of a charging flag variable (1 is set for starting charging, and 0 is set for not starting) set by itself. Secondly, before the self-charging is started, the device detects the total charging current of all the rear devices thereof, and the maximum value of the charging current of the device itself is known (for example, the maximum current value of each device's own charging input is about 27V/5A in the constant current phase, and the upper limit of this current value can be set by the hardware parameters of the charge management circuit). Therefore, after the software performs the self-charging starting operation, a change in the bus current detected by the device bus current detecting portion can also be used to determine whether or not it has entered the charging state. In addition, after the device has started self-charging, the battery electricity amount of the device itself gradually increases as the charging progresses, and it is also determined whether the device itself has started self-charging by detecting the battery electricity amount of the device itself. Finally, the charging management circuit of the device can output a charging state signal to the MCU when being charged to operate, and the MCU can also determine the current charging state of the device by detecting an H/L value of the charging state signal.

Fig. 3 is a flow chart showing a method for controlling charging a charging device on a trolley according to an embodiment of the present invention. The executive body of the method can be a charging control device that can be used to regulate the charging of a charging queue consists of a plurality of charging devices.

As shown in Fig. 3, a method of controlling charging includes the following steps:

In step S301, a plurality of charging devices is serially connected to form a charging queue, and parameters of at least some charging devices in the charging queue are detected.

In this embodiment, the parameters of the charging device may be selected from a current value Iₜₒₜₐₗᵢ in a charging bus that supplies power to a charging device, whether it is in a charging state, and the current electricity amount (available in percentage, for example, when the battery is fully charged, the current electricity amount is 100%, when not charged, the current electricity amount is 0). In practical applications, various parameter information of the charging device may be acquired by respective acquisition circuits of the parameters, and each type of parameter information is acquired with a corresponding acquisition circuit. During commissioning, it is necessary to measure key data by means of a conventional instrument, and correlate the measured data with information acquired by the acquisition circuit, as a basis for a control program to determine information in actual applications. The method of obtaining the location information will be described in detail below.

In step S302, a relative location of each charging device in the queue is determined. For example, in a charging queue consisting of 10 charging devices, the charging device at the queue head can be numbered as location 1. The charging device at the queue tail can be numbered as location 10. The charging devices between the queue head and the queue tail can be numbered in order as location 2 to location 9. In particular, the numbering of each charging device in the queue can be set as needed. For example, the charging device at the queue tail is numbered as location 1. The charging device at the queue head is numbered as location 10. The charging devices between the queue tail and the queue head can be numbered from location 2 to location 9 in order. The specific numbering way is not limited here.

In step S303, the charging of each charging device is started or stopped according to the parameters and the relative location of the charging device.

Therefore, the embodiment of the present invention can realize the serial connection of any number of charging devices into the queue at any time without exceeding the power load by controlling start or stop of the charging of each charging device, thereby improving the safety performance. In addition, overcharging phenomenon can be avoided by stopping charging in a timely manner, thereby saving electric energy. Also, the charging device at the queue tail can be charged preferentially, making it convenient for picking up a trolley from the queue tail, thereby improving charging efficiency.

In some embodiments, whether or not to change a charging current or voltage of each charging device can be determined according to the parameters of the charging device. For example, the current electricity amount of the trolley at the queue tail (the last one, that is, away from the charging power terminal) is 90%. At this time, the current of the trolley can be reduced to preferentially charge a front (second last) trolley.

In some embodiments, when it is determined that a current value on a charging bus that supplies power to a charging device reaches a preset current threshold (e.g., 52A), the charging current for self-charging is cut off. Thereby ensuring that the current value on the charging bus is within a safe range, and that the charging worker can freely stack any number of trolleys into the charging queue without causing the power supply to exceed the rated load.

In some embodiments, when it is determined that the charging device is at the queue tail, it starts to charge itself. The trolley at the queue tail has the right to charge first. If the trolley at the queue tail has not been charged, the front trolleys thereof cannot be charged unless charging of the trolley at the queue tail has completed. Charging of a charging device will start when it is determined that this charging device is located in front of the queue tail and a charging device nearby toward the queue tail has started self-charging or has completed charging, the. This is to prioritize charging of the charging device at the tail to ensure that the trolley taken from the queue tail has enough power.

In some embodiments, when it is determined that the current electricity amount of a charging device in the queue is minimal, self-charging is started. After the charging device starts self-charging, it is also possible to increase the charging current for self-charging. Thereby, enabling the trolley with low electricity amount in the queue to be preferentially charged, so that the electricity amount of each trolley after charging is in an average level, and the situation where the user takes a trolley with low electricity and insufficient electricity during use is avoided.

In some embodiments, when the current electricity amount of a charging device reaches a preset electricity amount threshold, the charging current for self-charging is reduced. In this way, the charging electricity amount of each charging device in the charging queue can be equalized, and the situation where the charging device at the tail is overcharged while its front charging device has insufficient electricity or even not charged can be avoided.

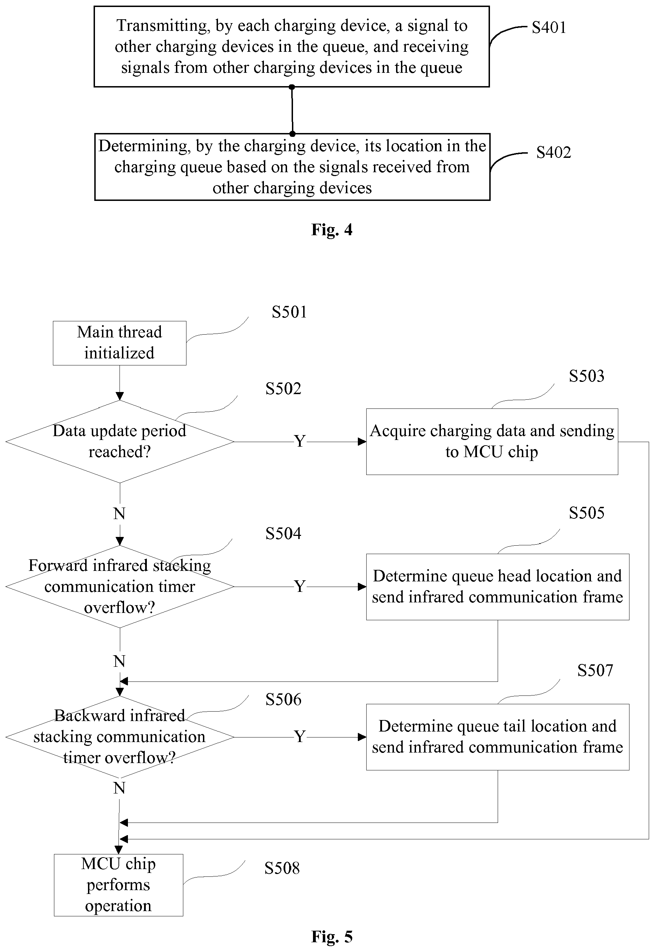

Fig. 4 is a schematic diagram of detecting the location information of each trolley in the charging queue of Fig. 3. As shown in Fig. 4, determining a relative location of each charging device in the queue may include the following steps.

In step S401, each charging device sends a signal to other charging devices in the queue, and receives signals from other charging devices in the queue.

In step S402, the charging device determines its location in the charging queue according to the signals received in response from the other charging devices.

Specifically, the method further includes the following steps.

Each charging device transmits a signal to a front charging device and a rear charging device thereof, and receives signals from the front charging device and the rear charging device thereof.

When a charging device fails to receive a signal transmitted by a front charging device thereof within a preset time, it is determined that the charging device is located at the head of the queue.

When a charging device fails to receive a signal transmitted by a rear charging device thereof within a preset time, it is determined that the charging device is located at the queue tail.

The location information of other charging devices in the charging queue is determined according to the location information at the queue head and the queue tail.

In the present embodiment, an infrared means (for example, an infrared transmitting device and an infrared receiving device) can be used to establish communication between two adjacent trolleys for information exchange. The information is parsed and processed to determine a relative location of the trolley in the charging queue as a reference condition for whether or not to start charging of the trolley.

In the present embodiment, a stacking determination signal can be transmitted forward and backward by front and rear infrared transmitting devices mounted on the chassis of a trolley. If the trolley is in the middle of the queue, the trolley is stacked with trolleys (in a stacked manner) in the front and rear directions. Since the adjacent trolleys are equipped with infrared receiving devices and transmitting devices, the trolley receives response information from the front and rear adjacent trolleys after transmitting the location signal. If the trolley is at the queue tail, because there is no other trolley stacked behind the queue tail, the location signal transmitted by the trolley at the queue tail is not responded accordingly, so it can be determined that it is at the queue tail. Similarly, the location signal transmitted by the trolley at the queue head to the front direction is also not responded accordingly, so it can be determined that it is at the queue head.

In the present embodiment, on the basis of determining the head and tail trolleys in the queue, the infrared communication established between the adjacent trolleys can be used to determine a forward or backward order of the queue from the first trolley to the last trolley.

Referring to Figs. 1 and 4, in this embodiment, a charging device 1 (which is blocked out by the lower frame of trolley 1) connected to the charging power source, charging device 2 (which is blocked out by the lower frame of trolley 2) connected to the charging device 1, the charging device 3 (which is blocked by the lower frame of trolley 3) connected to the charging device 2... , and charging device 10 (which is blocked out by the lower frame of trolley 10) connected to the charging device 9 may constitute a charging queue including 10 charging devices. The charging device determined to be the queue head (i.e., charging device 1) in the above method is numbered as location 1, and the charging device determined to be the queue tail (i.e., charging device 10) is numbered as location 10. The charging device at the queue head transmits information including the location 1 to the charging device 2. After receiving the information, the charging device 2 adds 1 to the location 1 to acquire information of the location 2. Similarly, the charging device 2 transmits information including the location 2 to the charging device 3. After receiving the information, the charging device 3 adds 1 to the location 2 to acquire the information of the location 3. The location of charging devices 4-9 is also determined in the above manner, and details are not described herein again.

In this embodiment, the infrared transmitting device may be a device that transmits a near-field infrared signal, and the infrared receiving device may be a device that receives a near-field infrared signal. Thus, the infrared transmitting device and the infrared receiving device may have a limited distance when the information is exchanged (for example, within 5cm). This not only ensures that adjacent charging devices (because the two are adjacent, the distance between the two can meet the requirement) can exchange information, but also prevent information interference of non-adjacent charging devices.

Fig. 5 is a schematic flow chart of information interaction between adjacent trolleys.

In this embodiment, the models and hardware configurations of the trolleys are the same (for example, a charging device and a connector may be mounted at the bottom of the trolley, and each charging device may be connected in series with other charging devices through a connector). The charging device installed on the trolley can exchange information through the infrared transmitting device and the infrared receiving device. Specifically, the infrared transmitting device and the infrared receiving device may be connected to a PCB (printed circuit board). The PCB may be equipped with various functional chips (such as CN3705 multi-type battery charging management IC chip for battery charging management, and REN78AS (Renesas Electronics) RST78 series MCU chip with A/D input port for arithmetic control).

As shown in Fig. 5, the process includes the following steps.

In step S501, a main thread is initialized (this step is performed in a conventional manner for the purpose of subsequent operations).

In step S502, it is determined whether the data (the location of a charging device and an identifier of whether the current charging device is charged, etc.) update period (which can be determined by an overflow signal of a timer inside the MCU chip) is reached.

The timer can send an overflow signal every 5 seconds (this time can be set as required, without any restrictions in this respect) (the above update period is 5 seconds). If a charging device fails to receive a signal from a front charging device within 5 seconds, which indicates that there is no charging device in front of the charging device, then it can be determined that the charging location is in the first trolley.

In step S503, when the data update period is reached, the location of a charging device in the current charging queue and an identifier of whether the current charging device is charged are obtained, and the obtained data is transmitted to the MCU chip. Then, the program jumps to step S508.

In step S504, when the data update period is not reached, it is determined whether a forward infrared stacking communication timer overflows.

In step S505, when the forward (the direction from back to front) timer overflows, the location of the current trolley is determined as the queue head location. The current trolley sends a stack infrared communication data frame to a rear trolley thereof.

In step S506, when the timer does not overflow, it further determines whether a backward infrared stacking communication timer overflows in the backward direction (direction from front to back).

In step S507, when the backward timer overflows, the location of the current trolley is determined as the queue tail. The current trolley transmits a stacking infrared communication frame to a front trolley thereof.

In step S508, an MCU chip master performs operation processing according to the received data (the operation here can be operations such as addition, subtraction, comparison, etc. through logical operations such as AND, OR, etc. For example, the state of being charged can be represented by the number 1 and the state of no charging can be represented by the number 0.), and output a charging starting or stopping signal. For example, it may be determined according to whether the current charging device is charged and whether a rear charging device thereof is charged, and the current charging device is charged only after the condition that the rear charging device thereof has completed charging is satisfied.

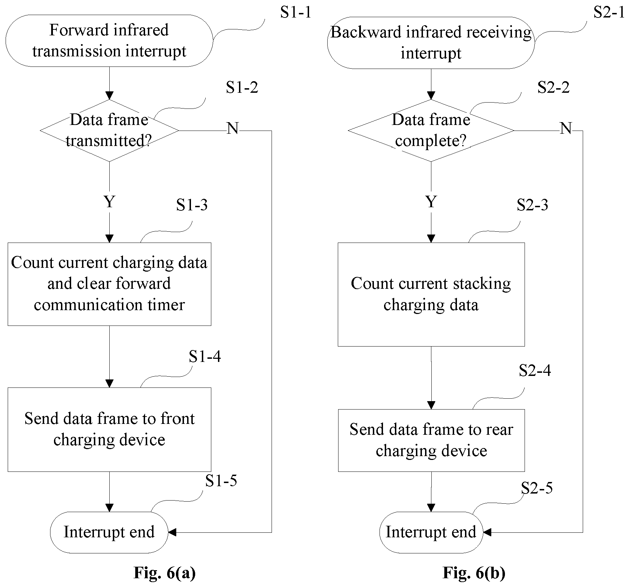

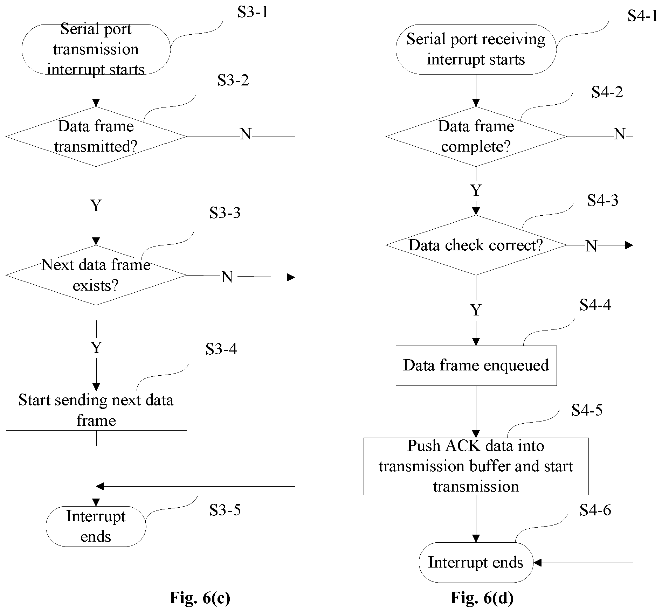

Fig. 6(a), 6(b), 6(c), and 6(d) are four schematic flow charts of an MCU processing interrupt procedures of the infrared transmitting device and the infrared receiving device in a PCB, respectively. It describes in detail the internal signal processing of the MCU. Those skilled in the art can understand that one or more MCUs can be selected according to the computing power of the MCU to handle all the above interrupt matters. For example, the MCU (Model 1) has a high computing power. Only the Model 1 MCU may be selected to handle all interrupt matters in Fig. 6(a), 6(b), 6(c), and 6(d). If the computing power of the MCU (model 2) is not high, 4 MCUs (model 2) can be set up to process the interrupt matters described in Fig. 6(a), 6(b), 6(c), 6(d) respectively.

Fig. 6(a) is a schematic flow chart of an interrupt of an MCU processing forward infrared transmission in a PCB. As shown in Fig. 6(a), the flow includes the following steps.

In step S1-1, a forward infrared transmission information interruption procedure starts. Here, the forward direction is from the queue tail to the queue head. The infrared transmitting device on a rear trolley transmits information (such as the location of a charging device and an identifier of whether the current charging device is charged, etc.), and the infrared receiving device of the current trolley receives the information.

In step S1-2, it is determined whether the infrared transmitting device of the rear trolley transmits an infrared communication data frame to the infrared receiving device on the current trolley.

In step S1-3, when it is determined that a data frame is transmitted, a current stacking charging data frame (for example, the location of a charging device and an identifier of whether the current charging device is charged, etc.) is acquired, and after the current stacking charging data frame is counted, the timer is cleared to prepare for subsequent operations.

When it is determined that no data is transmitted, the process jumps to step S1-5: the interruption ends.

In step S1-4, the current trolley sends a data frame to a front trolley.

In step S1-5, the interrupt ends.

Fig. 6(b) is a schematic flow chart of an interrupt of an MCU processing backward infrared reception in a PCB. As shown in Fig. 6(b), the process includes the following steps:

In step S2-1, a backward infrared reception information interruption procedure starts. Here, the backward direction refers to the direction from the queue head to the queue tail. The infrared transmitting device of a front trolley performs transmission, and the infrared receiving device of the current trolley performs receiving.

In step S2-2, it is determined whether the received data frame is complete.

When it is determined that the received data frame is incomplete, the process jumps to step S2-5 that the interruption ends.

In step S2-3, when it is determined that the data reception is complete, data on the stacking charging (for example, the location of a charging device and an identifier of whether the current charging device is charged, etc.) is acquired. After the data is acquired, the timer is cleared, and information such as whether the current charging device starts charging or the like is updated as a basis for whether to start or stop the charging operation during the subsequent charging process.

In step S2-4, the current trolley transmits a data frame to the charging device on a rear trolley.

In step S2-5, the interrupt ends.

Fig. 6 (c) is a schematic flow chart of an interrupt of an MCU processing serial port transmission data in a PCB. Similar to the interruption processing manners of Fig. 6(a) and Fig. 6(b), in the present embodiment, a serial port can be set on the PCB to connect the infrared transmitting device and the infrared receiving device.

As shown in Fig. 6(c), the processing of the interrupt may include the following steps.

In step S3-1, the serial port transmits data (such as the location of a charging device and an identifier of whether the current charging device is charged) and the interrupt starts.

In step S3-2, it is determined whether a data frame is transmitted.

In step S3-3, when the data frame has been transmitted, it is further determined whether it is necessary to send a next data frame. When the data frame is not transmitted, the process jumps to step S3-5: the interrupt ends.

In step S3-4, when the next data frame needs to be transmitted, the next data frame is started to be transmitted.

In step S3-5, the interrupt ends.

Fig. 6 (d) is a schematic flow chart of an interrupt of an MCU processing serial port receiving data in a PCB. As shown in Fig. 6(d), the process includes the following steps.

In step S4-1, the serial port receives data and the interrupt starts.

In step S4-2, it is determined whether the received data frame is complete.

When the received data frame is incomplete, the process jumps to step S4-6.

In step S4-3, when the received data frame is complete, it is determined whether a data check is correct.

When the data check is incorrect, the process jumps to step S4-6.

In step S4-4, when the data check is correct, the data frame is enqueued.

In step S4-5, ACK (Acknowledgement) data is pushed into a transmission buffer to start transmission.

In step S4-6, the interrupt ends.

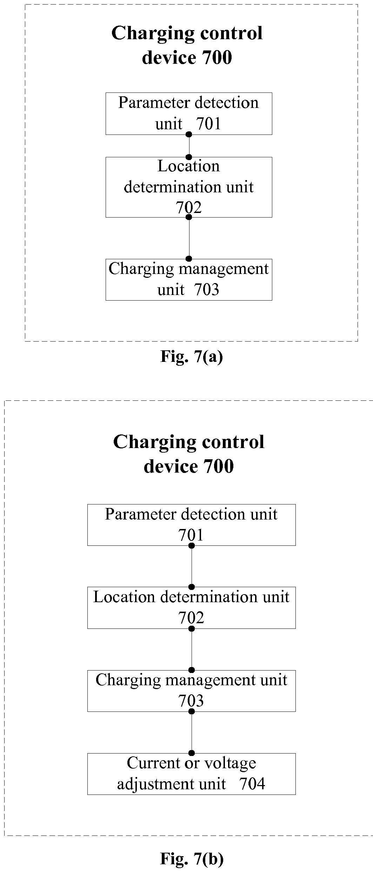

Fig. 7 (a) is a schematic structural diagram of a first embodiment of a charging control device of the present invention.

As shown in Fig. 7(a), the charging control device 700 includes a parameter detection unit 701, a location determination unit 702, and a charging management unit 703.

The parameter detection unit 701 is configured to detect parameters of at least some charging devices in a charging queue. The charging queue is formed by connecting a plurality of charging devices in series.

The location determination unit 702 is configured to determine a relative location of each charging device in the queue.

The charge management unit 703 is configured to start or stop charging of each charging device based on the parameters and the relative location of the charging device.

Fig. 7 (b) is a schematic structural diagram showing a second embodiment of the charging control device according to an embodiment of the present invention.

As shown in Fig. 7(b), an embodiment shown in Fig. 7(b) adds a current or voltage adjustment unit 704 to the embodiment shown in Fig. 7(a).

The current or voltage adjustment unit 704 is configured to determine whether to change a charging current or voltage of each charging device based on the parameters of the charging device.

The voltage adjustment unit can select a buck conversion chip, for example, TPS5450 of TI (Texas Instruments), RT8279 of RICHTEK, and the like.

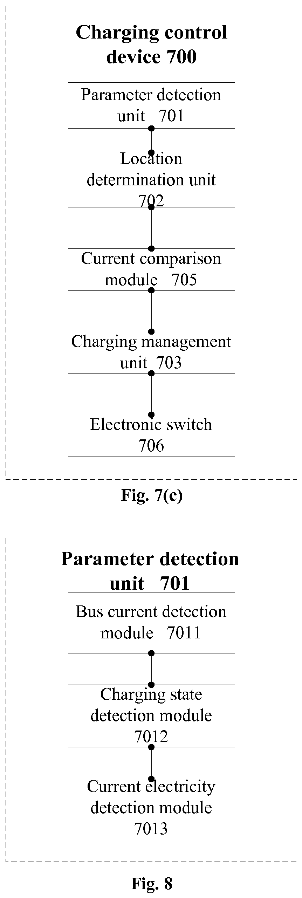

Fig. 7 (c) is a schematic structural diagram of a third embodiment of the charging control device of the present invention.

As shown in Fig. 7(c), the embodiment shown in Fig. 7(c) adds a current comparison module 705 and an electronic switch 706 to the embodiment shown in Fig. 7(a).

The current comparison module 705 is configured to compare a current value on a charging bus that supplies power to a charging device to a preset current threshold.

The electronic switch 706 is configured to, when it is determined that a current value on a charging bus that supplies power to a charging device reaches a preset current threshold, disconnect a charging current for self-charging.

Fig. 8 is a schematic structural diagram of a parameter detection unit according to an embodiment of the present invention.

As shown in Fig. 8, the parameter detection unit 701 may include a bus current detection module 7011, a charging state detection module 7012, and a current electricity amount detection module 7013. The operation of each module can include the following steps.

The bus current detection module 7011 is configured to detect a current on a charging bus that supplies power to a charging device, for the charging management unit to, when a current value on a charging bus that supplies power to a charging device reaches a preset current threshold, disconnect a charging current provided to the charging device;

The charging state detection module 7012 is configured to detect whether the charging device starts charging, and transmits the detection result to the charging management unit. When the charging management unit determines that the current charging device is located in front at the queue tail and the charging device near the queue tail has started self-charging or has completed charging, the charging of the current charging device is started; or

The current electricity amount detection module 7013 is configured to detect the current electricity amount of the charging device and transmit it to the charging management unit. Thus, when the charge management unit determines that the current electricity amount of the current charging device in the queue is minimum, the charging of this charging device is started.

The bus current detection module 7011 can adopt a Hall current detection component, and specifically can be related products of ALLEGRO (Allegro MicroSystems LLC), and the model number thereof is determined according to the maximum current value that the DC power supply for charging can provide. For example, when the maximum supply current is 40A, the ACS758LCB-050B-PFF-T of the company's ACS758XCB series can be selected, and the detection current range is plus or minus 50A. The MCU can be used with RENESAS's RL78 series of chips with A/D input ports. The charging state detection module 7012 can be composed of an external input voltage detection comparator TPS3700/TPS3701 and its external circuit, an MCU portion functional module, a charging circuit CN3705 portion functional module and related auxiliary circuits. The electricity amount detection module 7013 may be composed of a voltage dividing detection circuit or an electricity meter circuit and an MCU portion functional module.

In the same charging control device, bus current detection is a key factor related to safe charging and normal charging of the stacking queue, and also a key condition for whether the charging control device can start self-charging (for example, a trolley corresponding to the charging control device). The state of charge detection may be a series of detection and determination operations performed by the charging control device on whether or not it has a basic charging condition (for example, state detection and input voltage detection for determining whether or not it has been connected to an external charging source, state detection of a charging state flag set by the software for determining whether self-charging has been started, detection of a charging state indication signal generated by charging circuit hardware, and the like). The detection of the current electricity amount provides a reference for the charging control device to determine whether it is necessary to perform self-charging. The above three modules can be co-existing.

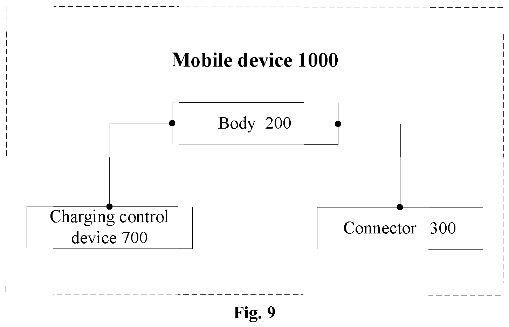

Fig. 9 is a schematic structural diagram of movable devices according to an embodiment of the present invention.

As shown in Fig. 9, the movable devices 1000 may include a body 200, a charging control device 700, and a connector 300. The body 200 may be a trolley in Fig. 1 or a shopping cart, a luggage van, etc., which is not limited in the present invention. The charging control device 700 has been described above and will not be described again. The charging control device 700 can be mounted on the bottom of the frame of the trolley or other location that is not easily touched by the user. The connector 300 is used to serially connect the charging control device 700 to a charging power source. Those skilled in the art will appreciate that the connector 300 can be fixedly mounted (e.g., soldered) to the bottom of the movable devices 1000, or it can be movably mounted (i.e., detachably mounted) to the bottom of the movable devices while charging. In addition, the connector 300 can be directly connected to the body 200, or can be connected to the body 200 through the charging control device 700. The specific connection manner can be set as needed, which is not limited in the present invention.

In this embodiment, the movable devices may also pre-configure the battery or reconfigure the battery at a later stage.

What has been described above is only some embodiments of the invention. It will be apparent to those skilled in the art that various modifications and improvements can be made without departing from the spirit and scope of the invention.

## Claims

1. A method for controlling charging of a plurality of charging devices, comprising:
connecting the plurality of charging devices in series to form a charging queue and detecting parameters of at least some charging devices in the charging queue;
determining a relative location of each charging device in the queue; and
starting or stopping charging of the charging devices according to said parameters and the relative location of the respective charging devices.

2. The method according to claim 1, further comprising:
determining whether to change a charging current or voltage of each charging device according to the parameters of the charging device.

3. The method according to claim 1, wherein the parameters of the charging device are selected from a current value on a charging bus that supplies power to a charging device, and the method further comprises: when it is determined that a current value on a charging bus that supplies power to a charging device reaches a preset current threshold, cutting off a charging current provided for the charging device; or
wherein the parameters are selected from whether the charging device is in a charging state and the electricity of the charging device at present, and the method comprises: starting self-charging of a charging device when it is determined that this charging device is located at the queue tail,;
starting charging of the charging device when it is determined that this charging device is located in front of the queue tail and a charging device nearby at the queue tail has started self-charging or has completed charging,; or
wherein the parameters are selected from whether a charging device is in a charging state and the electricity at present of the charging device , and the method comprises:
starting the charging of a charging device when it is determined that the electricity at present of this charging device in the queue is minimum,.

4. The method according to claim 3, further comprising: increasing a charging current for charging a charging device when the electricity at present of the charging device is less than a preset electricity threshold,.

5. The method according to claim 3, further comprising:
when the electricity at present of a charging device reaches a preset electricity threshold, reducing a charging current for charging the charging device, and starting charging of an uncharged charging device.

6. The method according to any one of claims 1 to 5, wherein determining a relative location of each charging device in the queue comprises:
transmitting, by each charging device, a signal to other charging devices in the queue, and receiving signals from other charging devices in the queue; and
determining, by the charging device, its location in the charging queue based on the signals received from other charging devices.

7. The method according to claim 6, further comprising:
transmitting, by each charging device, a signal to a front charging device and a rear charging device thereof, and receiving signals from the front charging device and the rear charging device thereof;
when the charging device fails to receive the signal transmitted by the front charging device within a preset time, it is determined that the charging device is located at the queue head;
when the charging device fails to receive the signal transmitted by the rear charging device within a preset time, it is determined that the charging device is located at the queue tail; and
determining location information of other charging devices in the charging queue according to the location information at the queue head and the queue tail.

8. A charging control device, comprising:
a parameter detection unit configured to detect parameters of at least some charging devices in a charging queue, the charging queue being formed by connecting a plurality of charging devices in series;
a location detection unit configured to determine a relative location of each charging device in the queue; and
a charging management unit configured to start or stop charging of each charging device according to the parameters and the relative location of the charging device.

9. The charging control device of claim 8, further comprising:
a current or voltage adjustment unit configured to determine whether to change a charging current or voltage of each charging device according to the parameters of the charging device.

10. The charging control device of claim 8, further comprising:
a current comparison module configured to compare a current value on a charging bus that supplies power to a charging device with a preset current threshold; and
an electronic switch configured to, when it is determined that a current value on a charging bus that supplies power to a charging device reaches a preset current threshold, disconnect a charging current for charging the charging device.

11. The charging control device according to any one of claims 8 to 10, wherein the parameter detection unit comprises:
a bus current detection module configured to detect a current on a charging bus that supplies power to a charging device for the charging management unit to, when a current value on a charging bus that supplies power to a charging device reaches a preset current threshold, cutting off a charging current provided to the charging device;
a charging state detection module configured to detect whether the charging device has started charging for the charging management unit to, when it is determined that the charging device is located in front at the queue tail and the charging device near the queue tail has started self-charging or has completed charging, start the charging of the charging device; or
an electricity detection module configured to detect the current electricity of the charging device for the charging management unit to, when the current electricity in the queue is minimum, start the charging of the charging device.

12. A movable device, comprising:
a body;
a charging control device according to any one of claims 8-11 mounted on the body;
a connector for connecting the charging control device in series to a charging power source.
